# EUROPÄISCHE PATENTANMELDUNG

(11) **EP 0 845 851 A1**
(43) Veröffentlichungstag der Anmeldung: **03.06.1998**
(21) Anmeldenummer: 97120418.5
(22) Anmeldetag: 21.11.1997
(51) Int. Cl.: H02K 41/03

(54) **Linearer Synchronmotor mit passivem Stator**

(30) Priorität: 29.11.1996 DE 19649518
(71) Anmelder: DAIMLER-BENZ AKTIENGESELLSCHAFT, 70546 Stuttgart (DE)
(72) Erfinder: Evers, Wolfgang, Dipl.-Ing., 52078 Aachen (DE); Rödder, Dieter, Dr.-Ing., 77830 Bühlertal (DE); Seelig, Anton, Ing. (grad.), 65439 Flörsheim (DE); Henneberger, Gerhard, Prof. Dr.-Ing., 52074 Aachen (DE)

(57) **Zusammenfassung**

Bei einem linearen Synchronmotor, dessen Anker eine mehrsträngige Wanderfeldwicklung und ein Erregersystem zur Erzeugung eines magnetischen Gleichflusses im Luftspalt des Motors aufweist und dessen passiver Reaktionsteil aus einem oder mehreren weichmagnetischen Körpern besteht, die den magnetischen Widerstand des Luftspaltes zwischen dem Reaktionsteil und dem dazu relativ bewegten Anker in der Bewegungsrichtung periodisch verändern, ist vorgesehen, daß der Anker zwei Ankerhälften aufweist, die auf beiden Seiten eines passiven Reaktionsteils (12) mit in Bewegungsrichtung periodisch wechselnden Bereichen hoher und niedriger magnetischer Leitfähigkeit angeordnet sind. Jede Ankerhälfte besteht aus einem genuteten Blechpaket (6, 6') mit einer in den Nuten liegenden Wanderfeldwicklung (7, 7'). Der Anker weist ein weichmagnetisches Joch (1) auf, das einen magnetischen Kreis (9) für den Gleichfluß über beide Ankerhälften und den Reaktionsteil schließt und mindestens eine hartmagnetischen Schicht (5, 5'), die in den magnetischen Kreis (9) eingefügt ist.

## Beschreibung

Für den Antrieb von autonomen spurgeführten Fahrzeugen der Fördertechnik, die beispielsweise zum Transport von Paketen, Gepäck, Akten oder zum Materialtransport in einer automatisierten Produktion zum Einsatz kommen, sind Linearmotoren wegen ihres einfachen mechanischen Aufbaus, einer direkten von jeglichen Reibkoeffizienten unabhängigen und geräuschfreien Schubkraftbildung von großem Vorteil. Hohe Geschwindigkeiten und kostengünstige Spurführungen erfordern Linearmotoren mit einem mechanischen Spiel von einigen Millimetern bis in den Zentimeterbreich. Der mit der Spurführung verbundene Teil des Motors kann wegen der gleichzeitigen und unabhängigen Bewegungen mehrerer Fahrzeuge mit keiner Wicklung ausgerüstet sein und darf aus Kostengründen sowie wegen der Gefahr der Anziehung kleiner Eisenteile oder -späne, die Betriebsstörungen verursachen können, keine Permanentmagnete enthalten. Außerdem sollte zwischen den zueinander relativ bewegten Teilen des Linearmotors keine nennenswerte Normalkraft, d. h. Anziehungskraft, wirken, weil diese die Reibung in den Führungen erhöht.

Grundsätzlich kann für die geschilderten Anforderungen ein linearer Induktionsmotor mit passiver Reaktionsschiene zum Einsatz kommen. Nachteilig ist hierbei der durch das mechanische Spiel bedingte große Luftspalt, der bekanntlich über die Wanderfeldwicklung des Motors magnetisiert wird und deshalb einen großen Blindleistungsbedarf sowie ein großes Wicklungsvolumen mit hohen Stromwärmeverlusten zur Folge hat.

Aus den Veröffentlichungen von G. W. McLean: 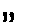 Review of recent progress in linear electrical machines", IEE Proceedings, Vol. 135, Pt. B, No. 6, November 1988 und von J. F. Eastham: 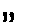 Novel synchronous maschines, linear and disc", IEE Proceedings, Vol. 137, Pt. B, No. 1, January 1990, sind heteropolare und homopolare lineare Synchronmaschinen bekannt, die einfach aufgebaute passive Reaktionsteile aus weichmagnetischen Stäben oder gestanzten Eisenblechen aufweisen. Der aktive Teil dieser Maschinen besitzt eine von Gleichstrom durchflossene Erregerwicklung und einen genuteten Anker mit einer Wanderfeldwicklung. Die weichmagnetischen Formteile des Reaktionsteils modulieren den von der Erregerwicklung erzeugten und transversal durch den Motor geführten magnetischen Gleichfluß in der Weise, daß im Luftspalt in der Bewegungsrichtung Bereiche oder Pole mit unterschiedlicher magnetischer Flußdichte entstehen. Mit Hilfe eines Stromrichters werden die Stränge der Wanderfeldwicklung so bestromt, daß eine Schubkraft in die gewünschte Richtung entsteht.

Diese aus der Literatur bekannten linearen hetero- oder homopolaren Synchronmaschinen haben jedoch im Hinblick auf die beabsichtigte Anwendung erhebliche Nachteile:
- Bei den bekannten Prinzipien wirkt eine beträchtliche Normalkraft, d. h. ein einseitiger magnetischer Zug.
- Wegen des erforderlichen großen Luftspaltes hat auch hierbei die Erregerwicklung ein großes Volumen und ein hohes Gewicht, und es treten erhebliche Erregerverluste auf.
- Die transversale Führung des magnetischen Flusses wird durch Ankerbauformen mit E- oder U-förmigem Querschnitt senkrecht zur Bewegungsrichtung erreicht. Die Wanderfeldwicklung ist bei der heteropolaren Maschine mit E-förmigem Anker auf dem Mittelschenkel, bei den Maschinen mit U-förmigem Querschnitt auf beiden Schenkein angeordnet. Diese Konstruktionen nutzen die für den Motor verfügbare Einbaubreite zur Krafterzeugung nur unvollständig aus. Ein erheblicher Teil der Einbaubreite wird für den Überstand der Wickelköpfe benötigt, so daß die kraftbildende Nutlänge im Verhältnis zur Gesamtbreite des Motors relativ kurz ist. Bei seitlichem Spiel kann sich der kraftbildende Überdeckungsbereich von Anker und Reaktionsteil noch weiter verkürzen, was zu einer Verminderung der Schubkraft führt.

Es ist daher die Aufgabe der vorliegenden Erfindung, einen Linearmotor mit passivem Reaktionsteil zu schaffen, der keine nennenswerte Normalkraft aufweist, der eine dem benötigten mechanischen Spiel entsprechende große Spaltweite hat, für die Erzeugung einer hohen magnetischen Flußdichte keine Erregerwicklung mit großem Volumen und hohen Stromwärmeverlusten benötigt und der die verfügbare Einbaubreite optimal zur Kraftbildung nutzt.
Ein Linearmotor, der diese Aufgabenstellung erfüllt, ist mit den Merkmalen des Hauptanspruchs zu realisieren.

Die durch die Erfindung erzielten Vorteile sind im folgenden aufgeführt.
Der Motor ist:
- normalkraftarm
- für Anwendugen mit großer Spaltweite geeignet
- besitzt einen einfachen Aufbau
- hat keine Erregerverluste und
- eine nur aus weichmagnetischen Stäben aufgebaute Reaktionsschiene.

Der prinzipielle Aufbau, seine Wirkungsweise und unterschiedliche Ausführungsbeispiele sind an Hand der Fig. 1 - 9 beschrieben. Es zeigen im einzelnen:
- Fig. 1: einen Längsschnitt durch ein Ausführungsbeispiel des erfindungsge mäßen Linearmotors mit einer dreisträngigen Wanderfeldwicklung und 2 Polpaaren,
- Fig. 2: eine Querschnittsdarstellung des Ausführungsbeispiels nach Fig. 1.
- Fig. 3: eine Veranschaulichung der Verteilung des magnetischen Flusses im Längsschnitt des Motors.
- Fig. 4: den prinzipiellen Verlauf der magnetischen Flußdichte im Luftspalt über die Länge des Motors mit der dazu relativen Lage der Spulen von zwei bestromten Wicklungssträngen und einer schematischen Darstellung der erzeugten Kräfte.
- Fig. 5: den Längsschnitt eines weiteren Ausführungsbeispiels des Motors mit einem Reaktionsteil, der Bereiche unterschiedlicher Spaltweiten und magnetischer Flußdichten innerhalb einer Polteilung auf den gegen überliegenden Hälften des zweiseitigen Motors aufweist.
- Fig. 6: den zu Fig. 5 gehörenden Querschnitt des Motors.
- Fig. 7: ein weiteres Ausführungsbeispiel des erfindungsgemäßen Motors im Längsschnitt, wobei der magnetische Fluß über zwei im Motorquerschnitt nebeneinanderliegende Ankerteilpaare geführt wird.
- Fig. 8: die Querschnittsdarstellung des Motors nach Fig. 7.
- Fig. 9: eine Sicht auf den Reaktionsteil des Motors nach Fig. 7 und Fig. 8 mit einer schematischen Darstellung der Motorwicklung.

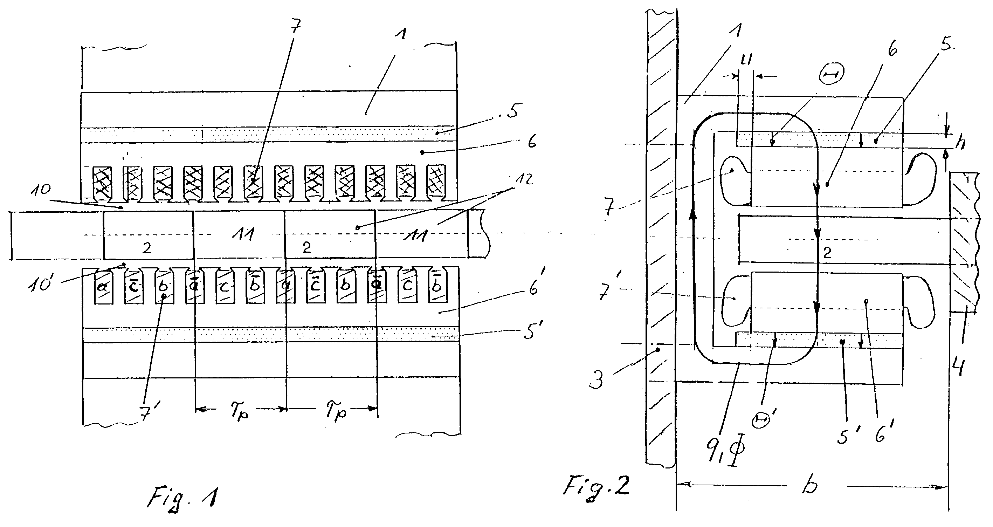

Der Aufbau und die Wirkungsweise des erfindungsgemäßen Linearmotors werden an Hand der Figuren 1 - 4 erklärt. Der in Fig. 1 dargestellte Längsschnitt in der Bewegungsrichtung und die zugehörige Querschnittsdarstellung in Fig. 2 zeigen zwei symmetrische Ankerhälften 1, 5, 6, 7 und 1, 5', 6', 7', die beidseitig eines aus weichmagnetischen Stäben 2 bestehenden Reaktionsteils 12 angeordnet sind. Für die weiteren Betrachtungen wird angenommen, daß der Reaktionsteil bzw. dessen weichmagnetischen Stäbe 2 mit der ruhenden Spurführung 4 eines Fahrzeuges verbunden sind. Die über das gemeinsame Joch 1 miteinander verbundenen Ankerhälften sind über dieses Joch an einem Fahrgestellteil 3 des Fahrzeuges montiert.

Jede Ankerhälfte weist ein genutetes Blechpaket 6 bzw. 6' mit je 12 Nuten auf. In den Nuten liegt, entsprechend der Teilung des Reaktionsteils 12 in weichmagnetische Stäbe 2 und Lücken 11 mit etwa gleichen Breiten τₚ, eine vierpolige Wanderfeldwicklung 7 bzw. 7' mit drei Strängen a, b und c. Zwischen den Rückseiten der Blechpakete 6 bzw. 6' und dem Joch 1 sind hartmagnetische Schichten 5 bzw. 5' aus einem Magnetwerkstoff mit hohem Energieinhalt, z. B. eine Neodym-Eisen-Borverbindung, angeordnet. Die Magnetisierungsrichtung der hartmagnetischen Schichten ist so gewählt, daß sich ihre magnetischen Spannungen Θ und Θ' in dem in Fig. 2 dargestellten magnetischen Kreis 9 addieren, um einen magnetischen Fluß φ vorwiegend über die Luftspalte 10, 10' und die Weicheisenstäbe 2 zu treiben. Die magnetische Spannung Θ+Θ' in dem Kreis 9 beträgt z. B. bei h = 0.5 cm Magnethöhe 10000 A. Sie treibt einen magnetischen Fluß Φ, dessen Dichte B₁₀ und B_{10'} in den Spalten 10 und 10' über den Stäben 2 mit einer Spaltweitensumme von 1 cm etwa 500 mT beträgt. Für die Erzeugung dieser Flußdichte in einem 1 cm breiten Spalt müßte eine herkömmliche Erregerwicklung bei erheblichem Raumbedarf und Gewicht sowie hohen Verlusten mindestens eine magnetische Durchflutung von 5000 A um die Blechpakete 6, 6' oder das Joch 1 herumführen. Ein derartiger Motor ist praktisch nicht realisierbar.

Fig. 3 zeigt im Längsschnitt des Motors den Verlauf des magnetischen Gleichflusses Φ, der mit gleichmäßiger Dichteverteilung über das Joch 1 und die Dauermagnetschichten 5 und 5' fließt, in den Blechpaketen 6 und 6' auf die Bereiche mit kleinerer magnetischer Spaltweite konzentriert wird und in diesen Bereichen magnetische 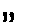 Pole" bildet. In den Lücken 11 ist die magnetische Spaltweite entsprechend der Dicke D der Weicheisenstäbe um ein Vielfaches größer als in den Spalten 10 und 10' und die Flußdichte erreicht nur einen gegenüber B₁₀ und B_{10'} wesentlich kleineren Wert B₁₁. Durch Erfassen der relativen Lage der Ankerteile zu den Weicheisenstäben beispielsweise mit Hilfe von induktiven Sensoren oder Hallsonden und einer von diesen Sensoren gesteuerten Bestromung der Motorstränge durch einen Stromrichter, wie das bei einem selbstgesteuerten Stromrichterantrieb mit Synchronmaschine Stand der Technik ist, wird erreicht, daß die Wicklungsstränge, deren Nuten etwa in der Mitte der Polbereiche liegen, so bestromt werden, daß eine resultierende Kraft in der gewünschten Richtung entsteht. Die Diagramme in Fig. 4 zeigen schematisch in Motorlängsrichtung den Verlauf der magnetischen Flußdichte B in den Luftspalten, die augenblickliche Bestromung der Wicklungsstränge a und b sowie die an den zugehörigen Zahnflanken der Blechpakete angreifenden resultierenden Kräfte Fₐ, F_{a'}, F_{b}, F_{b'}. Vereinfachend wurden die Angriffspunkte dieser Kräfte in die Mitte der Nuten gelegt. Diese Teilkräfte bilden in der Summe die in Fig. 3 dargestellte Gesamtkraft F_{G}, die den aktiven Motorteil gegenüber dem passiven Stator nach links bewegt.

Das dargestellte Linearmotorprinzip ist nahezu normalkraftfrei, weil der magnetische Fluß die Reaktionsschiene durchsetzt und bei symmetrischer Anordnung zwischen den Ankerhälften und der Reaktionsschiene auf beiden Seiten die gleichen Flußdichten und folglich auch die gleichen sich kompensierenden Zugkräfte wirken. Die Führung des magnetischen Gleichflusses über das U-förmige Joch 1 führt zu einem einfachen Reaktionsteil aus weichmagnetischen Stäben und zu einer raumsparenden, aus einfachen Spulen bestehenden kostengünstigen Wicklung. Mit diesem Prinzip wird auch ein gute Ausnutzung der verfügbaren Einbaubreite b mit langen Nuten zur Krafterzeugung erreicht, weil es keine nebeneinanderliegenden Ankerteile aufweist. Daraus ergibt sich auch der Vorteil nur geringer Kraftschwankungen bei seitlichen, durch das mechanische Spiel bedingten Verschiebungen zwischen dem Läufer und dem Stator. Die großflächige Anordnung der Erregermagnete zwischen den Rückseiten der Blechpakete 6 und 6' und dem Joch 1 ergibt eine gute Ausnutzung des hartmagnetischen Werkstoffs und eine hohe Flußdichte im Luftspalt, weil der magnetische Fluß hier auf eine wesentlich kleinere Fläche konzentriert wird.

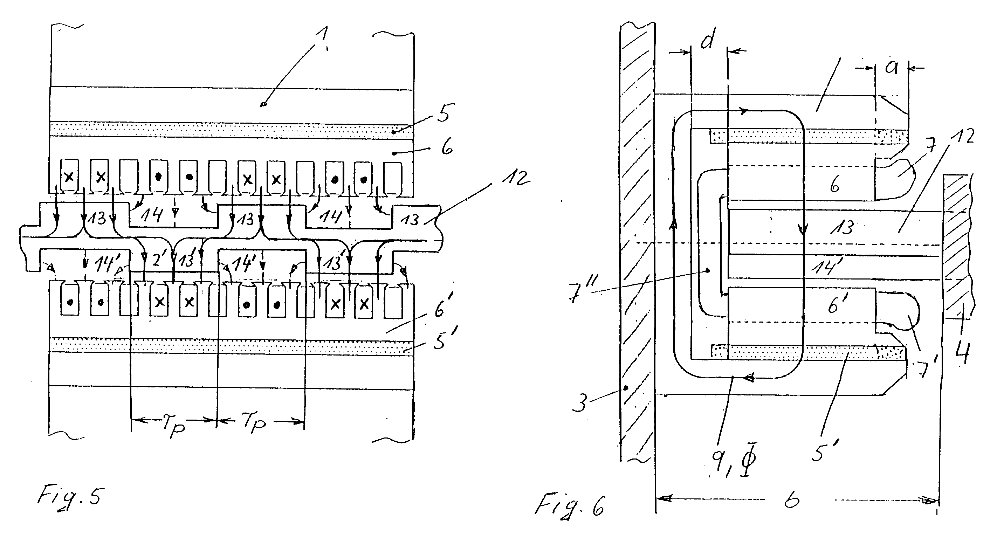

Durch zusätzliche Maßnahmen kann die Flußdichte und damit auch die Schubkraft des Motors weiter gesteigert werden, ohne die äußeren Abmessungen oder die Verlustleistung zu erhöhen. So wird der magnetische Streufluß von den Blechpaketen 6 bzw. 6' zu der geschlossenen Seite des U-förmigen Joches 1 hin durch einen Überstand u der hartmagnetischen Schichten über die Blechpakete hinaus, wie Fig. 2 zeigt, kompensiert. Der magnetische Fluß wird noch weiter erhöht, wenn, wie in Fig. 6 dargestellt, das Joch 1, die hartmagnetischen Schichten 5 und 5' sowie die angrenzenden nicht genuteten Bereiche der Blechpakete 6 und 6' auf der offenen Seite des U-förmigen Joches etwa um die Ausladung a der Stirnverbindungen über den genuteten Bereich der Blechpakete hinausragen.

Ein weiterer Vorteil des erfindungsgemäßen Motors ist seine raum- und kostensparende Integrierbarkeit in die Mechanik des Fahrzeugs und die Vorrichtung zur Spurführung. Das den magnetischen Kreis 9 für den Gleichfluß schließende Joch 1 wird vorteilhaft so gestaltet, daß es in der Fahrzeugkonstruktion zusätzlich Trag-oder Verbindungsfunktionen übernimmt. Es ist kostengünstig als weichmagnetisches Guß- oder Schmiedeteil oder geschweißtes Teil herzustellen. Der mit der Spurführung verbundene Reaktionsteil 12 kann so ausgebildet sein, daß er zur Steifigkeit der Spurführung beiträgt und als Lauffläche für Führungsräder mitverwendet wird.

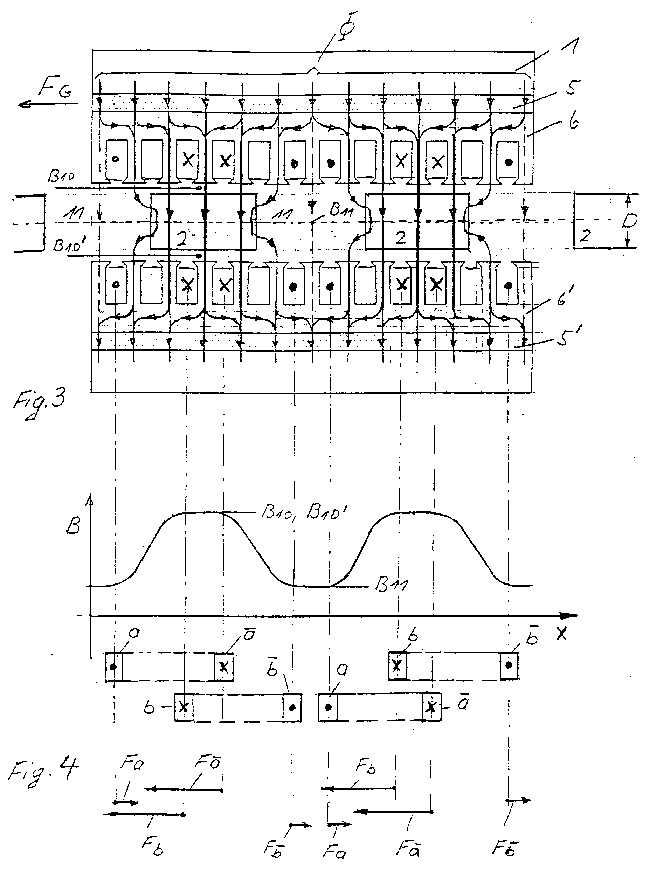

Eine Weiterentwicklung des erfindungsgemäßen Motors, der die verfügbare Einbaubreite b noch besser für die Krafterzeugung nutzt, ist in Fig. 5 und Fig. 6 dargestellt. Dieser Motor besitzt einen Reaktionsteil 12 aus einer weichmagnetischen Schiene, die so geformt ist, daß in der Bewegungsrichtung zwischen der Schiene und der oberen Ankerhälfte bzw. zwischen der Schiene und der unteren Ankerhälfte abwechselnd Bereiche 13 bzw. 13' mit kleiner magnetischer Spaltweite und Bereiche 14 bzw. 14' mit großer magnetischer Spaltweite im Abstand von τₚ aufeinanderfolgen, wobei jedem Bereich mit kleiner magnetischer Spaltweite auf der einen Seite der Reaktionsschiene ein Bereich mit großer magnetischer Spaltweite auf der anderen Seite der Reaktionsschiene gegenüberliegt. Grundsätzlich kann die in den Nuten der Ankerhälften liegende Wanderfeldwicklung, wie bei dem in Fig. 1 und Fig. 2 dargestellten Beispiel aus zwei mechanisch von einander getrennten Wicklungen beiderseits der Reaktionsschiene bestehen. Der besondere Vorteil des in Fig. 5 und Fig. 6 gezeigten Ausführungsbeispiels besteht jedoch darin, daß innerhalb jeder Polteilung entsprechend der auf beiden Seiten der Reaktionsschiene liegenden Bereiche mit hoher und niedriger magnetischer Flußdichte die Ströme in den gegenüberliegenden Nuten der beiden Ankerhälften entgegengesetzte Richtung haben. Dadurch ist es möglich, in die Ankerhälften beidseitig der Reaktionschiene eine gemeinsame Wicklung einzulegen, deren Stirnverbindungen 7'' auf der geschlossen Seite des U-förmigen Joches zwischen zwei auf beiden Seiten der Reaktionsschiene gegenüberliegenden Nuten der beiden Ankerhälften verlaufen. Das vermeidet raumbeanspruchende Kreuzungen der Stirnverbindungen und der Abstand d zwischen den Ankerblechpaketen und der Innenseite des Joches 1 kann bei dem in den Figuren 5 und 6 dargestellten Motor kleiner sein als bei dem Ausführungsbeispiel nach Fig. 1 und Fig. 2. Die gemeinsame Wicklung der beiden Ankerhälften ist vorteilhaft so ausgeführt, daß pro Strang und Polpaar des Motors eine Spule vorhanden ist, deren parallelen Seiten U-förmig gebogen und in der Weise in die Nuten der sich gegenüberstehenden Blechpakete 6 und 6' eingeschoben sind, daß jeder quer verlaufende Spulenabschnitt 7'' auf der geschlossenen Seite des U-förmigen Joches die Verbindung zwischen zwei gegenüberliegenden Nuten der beiden Ankerhälften herstellt. Die Stirnverbindungen 7 und 7' an den Schenkeln der U-förmigen Spule verbinden die Spulenseiten, die auf einer Ankerhälfte in Nuten liegen, die etwa um eine Polteilung voneinander entfernt sind.

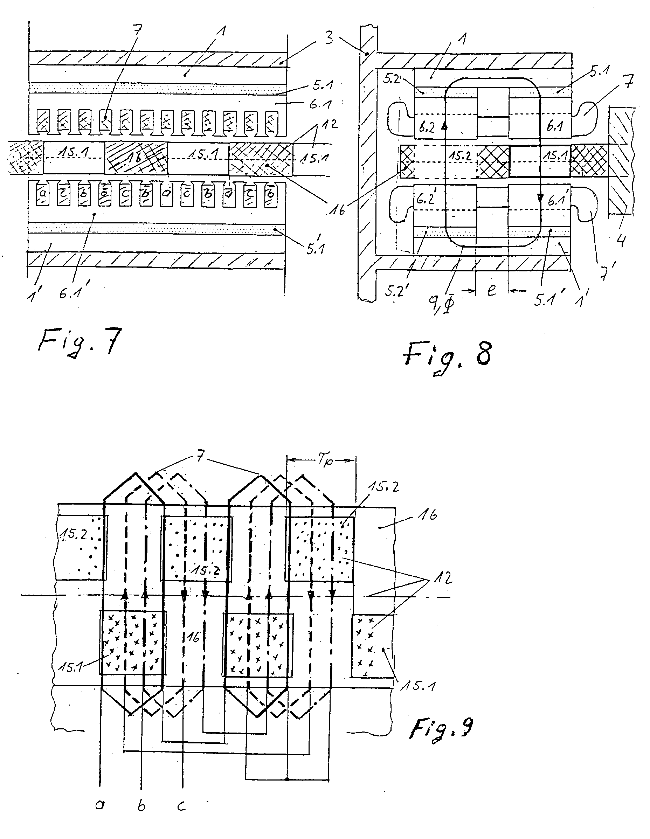

An Hand der Figuren 7 bis 9 werden weitere Ausführungsbeispiele des erfindungsgemäßen Motors erläutert. Bei diesen sind, wie Fig. 8 zeigt, in der zur Bewegungsrichtung senkrechten Querschnittsebene auf beiden Seiten des Reaktionsteils je zwei Ankerhälften, die aus genuteten Blechpaketen 6.1 und 6.2 bzw. 6.1' und 6.2' mit Wanderfeldwicklungen 7 bzw. 7' sowie hartmagnetischen Schichten 5.1 und 5.2 bzw. 5.1' und 5.2' bestehen, nebeneinander in einem Mindestabstand e unter gemeinsamen Jochen 1 bzw. 1' angeordnet. Die magnetischen Spannungen der hartmagnetischen Schichten treiben den magnetischen Fluß Φ in dem magnetischen Kreis 9 über die vier Ankerhälften, die mit dem gemeinsamem Reaktionsteil zwei Teilmotoren bilden. Die vier Ankerhälften sind an einem U-förmigen nichtmagnetischen Konstruktionsteil 3, das Bestandteil des Fahrzeugs sein kann, befestigt. Für die Realisierung der Wicklung und des Reaktionsteils bestehen zwei prinzipielle Möglichkeiten.

Werden in die Nuten der Ankerhälften gemeinsame Spulen eingelegt, deren Spulenseiten geradlinig durch die Nuten der nebeneinanderliegenden Blechpakete 6.1 und 6.2 bzw. 6.1' und 6.2' gehen, dann sind in dem Reaktionsteil 12 die Bereiche hoher magnetischer Leitfähigkeit 15.1 und 15.2 für die beiden Teilmotoren um eine Polteilung τₚ versetzt. Die Figuren 7 bis 9 zeigen einen Reaktionsteil, der aus einer elektrisch und magnetisch nichtleitenden Schiene 16 beispielsweise aus einem Kunststoff besteht, in die weichmagnetische Körper 15.1 und 15.2 eingebettet sind. Punkte und Kreuze kennzeichnen die entgegengesetzten Richtungen des magnetischen Flusses in den weichmagnetischen Körpern der beiden Teilmotoren. Der Reaktionsteil dieses Motors kann auch aus einer weichmagnetischen Schiene bestehen, bei der die Bereiche höherer magnetischer Leitfähigkeit durch eine größere Dicke der Schiene, d.h. eine kleinere Spaltweite zwischen der Reaktionsschiene und den Ankerhälften, realisiert ist.

Bei der zweiten Möglichkeit zur Realisierung eines derartigen Motors bestehen die Bereiche hoher magnetischer Leitfähigkeit des Reaktionsteils aus weichmagnetischen Stäben, welche im Abstande von zwei Polteilungen zwischen den gegenüberliegenden Blechpaketen 6.1 und 6.1' sowie 6.2 und 6.2' angeordnet sind und die mit dem Abstand e nebeneinanderliegenden Blechpakete 6.1 und 6.2 sowie 6,1' und 6.2' überdecken. In die Nuten der Blechpakete ist die Wicklung in der Weise eingelegt, daß entsprechend der entgegengesetzten Richtung des magnetischen Flusses in diesen Blechpaketen und in den Luftspalten zum Reaktionsteil auch die Ströme in den sich gegenüberstehenden Nuten der nebeneinanderliegenden Blechpakete 6.1 und 6.2 bzw. 6.1' und 6.2' entgegengesetzt gerichtet sind.

Die den Figuren 1, 5 und 9 entsprechend unterschiedlich ausgebildeten Reaktionsteile haben die Aufgabe, im Luftspalt in Bewegungsrichtung abwechselnd Bereiche von der Länge τₚ mit möglichst unterschiedlichen magnetischen Flußdichten zu bilden, wobei der magnetische Gesamtfluß Φ unabhängig von der relativen Lage zwischen Anker und Reaktionsteil konstant bleiben soll. Bei Motoren mit einer kleinen Polpaarzahl und insbesondere Reaktionsteilen mit weichmagnetischen Stäben ist jedoch der magnetische Gesamtfluß in der in Fig. 1 gezeigten Stellung geringer als in der um eine Polteilung τₚ verschobenen Stellung mit etwas höherem magnetischen Leitwert im Luftspalt. Die damit verbundenen Änderungen des Energieinhaltes des Erregerfeldes während der Bewegung verursachen Schwankungen der Schubkraft und Rastkräfte, die den Anker in die Lage des geringsten magnetischen Widerstandes ziehen. Diese unerwünschten Kräfte sind wesentlich vermindert, wenn der aktive Motorteil in n gleiche Teile aufgeteilt ist und diese Teile so miteinander verbunden sind, daß die Ankerteile an der gemeinsamen Reaktionsschiene einen Abstand haben, der um die Strecke 2τₚ/n gegenüber einem ganzzahligen Vielfachen von 2τₚ abweicht. Es ist dabei in der Regel ausreichend n=2 Teilmotoren um eine Polteilung versetzt anzuordnen.

## Patentansprüche

1. Linearer Synchronmotor, dessen Anker eine mehrsträngige Wanderfeldwicklung und ein Erregersystem zur Erzeugung eines magnetischen Gleichflusses im Luftspalt des Motors aufweist und dessen passiver Reaktionsteil aus einem oder mehreren weichmagnetischen Körpern besteht, die den magnetischen Widerstand des Luftspaltes zwischen dem Reaktionsteil und dem dazu relativ bewegten Anker in der Bewegungsrichtung periodisch verändern,
**dadurch gekennzeichnet**,
- daß der Anker zwei Ankerhälften aufweist, die auf beiden Seiten eines passiven Reaktionsteils (12) mit in Bewegungsrichtung periodisch wechselnden Bereichen hoher und niedriger magnetischer Leitfähig keit angeordnet sind,
- daß jede Ankerhälfte aus einem genuteten Blechpaket (6, 6') mit einer in den Nuten liegenden Wanderfeldwicklung (7, 7') besteht,
- daß der Anker ein weichmagnetisches Joch (1) aufweist, das einen magnetischen Kreis (9) für den Gleichfluß über beide Ankerhälften und den Reaktionsteil schließt, und
- daß mindestens eine hartmagnetischen Schicht (5, 5') vorgesehen ist, die in den magnetischen Kreis (9) eingefügt ist.

2. Synchronmotor nach Anspruch 1,
dadurch gekennzeichnet,
daß mindestens eine hartmagnetische Schicht (5, 5') zwischen der Rückseite eines der Blechpakete (6, 6') und dem weichmagnetischen Joch (1) angeordnet ist.

3. Synchronmotor nach einem der Ansprüche 1 oder 2,
dadurch gekennzeichnet,
daß die hartmagnetischen Schichten zwischen den Blechpaketen und dem Joch zu der geschlossenen Seite des U-förmigen Joches hin einen Überstand (u) über die Blechpakete hinaus aufweisen.

4. Synchronmotor nach einem der Ansprüche 1 bis 3,
dadurch gekennzeichnet,
daß zur Steigerung des magnetischen Flusses das Joch (1), die hartmagnetischen Schichten (5, 5') und die angrenzenden nicht genuteten Bereiche der Blechpakete (6, 6') auf der offenen Seite des U-förmigen Joches etwa um die Ausladung (a) der Stirnverbindungen über den genuteten Bereich der Blechpakete hinausragen.

5. Synchronmotor nach einem der Ansprüche 1 bis 4,
dadurch gekennzeichnet,
daß der Reaktionsteil (12) aus weichmagnetischen Stäben (2) besteht, die in Bewegungsrichtung im Abstande von zwei Polteilungen (2τₚ) angeordnet sind und etwa die Breite einer Polteilung haben.

6. Synchronmotor nach einem der Ansprüche 1 bis 4,
dadurch gekennzeichnet,
daß der Reaktionsteil (12) aus einem gezahnten weichmagnetischen Eisenblech besteht, wobei Zähne und Lücken etwa die Breite einer Polteilung haben und der Verbindungssteg an den Zahnwurzeln zur Befestigung des Reaktionsteils an der Spurführung der Fahrzeuge dient.

7. Synchronmotor nach einem der Ansprüche 1 bis 4,
dadurch gekennzeichnet,
daß der Reaktionsteil (12) aus einer weichmagnetischen Schiene besteht, die so geformt ist, daß in der Bewegungsrichtung zwischen der Schiene und der oberen Ankerhälfte sowie zwischen der Schiene und der unteren Ankerhälfte abwechselnd Bereiche (13, 13') mit kleiner magnetischer Spaltweite und Bereiche (14, 14') mit großer magnetischer Spaltweite im Abstand von τₚ aufeinanderfolgen, wobei jedem Bereich mit kleiner magnetischer Spaltweite auf der einen Seite ein Bereich mit großer magnetischer Spaltweite auf der anderen Seite gegenüberliegt.

8. Synchronmotor nach einem der Ansprüche 1 bis 7,
dadurch gekennzeichnet,
daß die Wanderfeldwicklung jeder Ankerhälfte aus einer gleichen Anzahl von Spulen besteht, wobei für jede Ankerhälfte pro Wicklungsstrang und Polpaar eine Spule vorhanden ist.

9. Synchronmotor nach Anspruch 7,
dadurch gekennzeichnet,
daß in die Nuten der beidseitig der Reaktionsschiene liegenden Ankerhälften eine gemeinsame Wicklung eingelegt ist, wobei die Stirnverbindungen der Wicklung auf der geschlossen Seite des U-förmigen Joches zwischen zwei auf beiden Seiten der Reaktionsschiene gegenüberliegenden Nuten der beiden Ankerhälften verlaufen (7'') und daß auf der offenen Seite des U-förmigen Joches stets die Leiter von zwei Nuten derselben Ankerhälfte über die Stirnverbindungen (7, 7') verbunden sind.

10. Synchronmotor nach Anspruch 9,
dadurch gekennzeichnet,
daß die gemeinsame Wicklung beider Ankerhälften pro Strang und Polpaar des Motors eine Spule aufweist, deren parallelen Seiten U-förmig gebogen und in der Weise in die Nuten der sich gegenüberstehenden Blechpakete (6, 6') der beiden Ankerhälften eingeschoben sind, daß jeder quer verlaufende Spulenabschnitt (7'') auf der geschlossenen Seite des U-förmigen Joches die Verbindung zwischen zwei gegenüberliegenden Nuten der beiden Ankerhälften herstellt und die Stirnverbindungen (7, 7') an den beiden Schenkeln der U-förmigen Spule die Spulenseiten verbinden, die auf einer Ankerhälfte einen Abstand von etwa einer Polteilung haben.

11. Synchronmotor nach einem der Ansprüche 1 bis 10,
dadurch gekennzeichnet,
daß das den magnetischen Kreis (9) für den magnetischen Gleichfluß schließende Joch (1) integraler Bestandteil der Fahrzeugkonstruktion und als weichmagnetisches Guß- oder Schmiedeteil oder geschweißtes Teil hergestellt ist.

12. Synchronmotor nach einem der Ansprüche 1 bis 4,
dadurch gekennzeichnet,
daß in der zur Bewegungsrichtung senkrechten Querschnittsebene auf beiden Seiten des Reaktionsteils je zwei Ankerhälften, die aus genuteten Blechpaketen (6.1 und 6.2) bzw. (6.1' und 6.2') mit Wanderfeldwicklungen (7, 7') sowie hartmagnetischen Schichten (5.1 und 5.2) bzw. (5.1' und 5.2') bestehen, nebeneinander in einem Mindestabstand (e) unter gemeinsamen Jochen (1 bzw. 1') angeordnet sind.

13. Synchronmotor nach Anspruch 12,
dadurch gekennzeichnet,
daß in den Nuten der auf jeder Seite des Reaktionsteils nebeneinanderliegenden Blechpaketen (6.1, 6.2 bzw. 6.1', 6.2') eine gemeinsame Wicklung liegt.

14. Synchronmotor nach einem der Ansprüche 12 und 13,
dadurch gekennzeichnet,
daß die Bereiche hoher magnetischer Leitfähigkeit (15.1, 15.2) in dem gemeinsamen Reaktionsteil (12) für die beiden Teilmotoren in Bewegungsrichtung um eine Polteilung versetzt sind und die Wicklungen auf beiden Seiten des Reaktionsteils aus Spulen bestehen, die für beide Teilmotoren gemeinsam sind, wobei die Spulenseiten geradlinig durch die Nuten der nebeneinanderliegenden Blechpakete (6.1, 6.2 bzw. 6.1', 6.2') gehen.

15. Synchronmotor nach einem der Ansprüchen 12 bis 14,
dadurch gekennzeichnet,
daß der Reaktionsteil aus einer weichmagnetischen Schiene besteht und die Bereiche höherer magnetischer Leitfähigkeit durch eine größere Dicke der Schiene, d.h. eine kleinere Spaltweite zwischen der Reaktionsschiene und den Ankerhälften, realisiert ist.

16. Synchronmotor nach einem der Ansprüche 1 bis 14,
dadurch gekennzeichnet,
daß der Reaktionsteil aus einer magnetisch und elektrisch nichtleitenden Schiene (16) beispielsweise aus einem Kunststoff besteht und in den Bereichen hoher weichmagnetischer Leitfähigkeit (15.1, 15.2) weichmagnetische Körper eingebettet sind.

17. Synchronmotor nach einem der Ansprüche 12 und 13,
dadurch gekennzeichnet,
daß die in Bewegungsrichtung wechselnden Bereiche hoher und niedriger magnetischer Leitfähigkeit des Reaktionsteils durch weichmagnetische Stäbe realisiert sind, welche im Abstande von zwei Polteilungen zwischen den gegenüberliegenden Blechpaketen (6.1 und 6.1' sowie 6.2 und 6.2') angeordnet sind und die mit Abstand (e) nebeneinanderliegenden Blechpakete (6.1 und 6.2 sowie 6,1' und 6.2') überdecken und daß Wicklungen in die Nuten der Blechpakete in der Weise eingelegt sind, daß entsprechend der entgegengesetzten Richtung des magnetischen Flusses die Ströme in den sich gegenüberstehenden Nuten der nebeneinanderliegenden Blechpakete (6.1 und 6.2 bzw. 6.1' und 6.2') entgegengesetzt gerichtet sind.

18. Synchronmotor nach einem der Ansprüche 1 bis 17,
dadurch gekennzeichnet,
daß der Reaktionsteil (12) integraler Bestandteil der Spurführung für eines oder mehrere Fahrzeuge ist und als Lauffläche für Führungsrädern mitverwendet wird.

19. Synchronmotor nach einem der Ansprüche 1 bis 18,
dadurch gekennzeichnet,
daß der aktive Motorteil in n gleiche Teile aufgeteilt ist und diese Teile so miteinander verbunden sind, daß die Ankerteile an der gemeinsamen Reaktionsschiene einen Abstand haben, der um die Strecke 2τₚ/n gegenüber einem ganzzahligen Vielfachen von 2τₚ abweicht.
